# EUROPEAN PATENT SPECIFICATION

(11) **EP 2 990 943 B1**
(45) Date of publication and mention of the grant of the patent: **04.12.2019**
(21) Application number: 13882545.0
(22) Date of filing: 25.10.2013
(51) Int. Cl.: H04R 1/10, H04R 5/033, H04M 1/725, H04R 5/04, H04R 19/04

(54) **INTELLIGENT TERMINAL DEVICE CONTROL METHOD AND SYSTEM**
STEUERUNGSVERFAHREN UND -SYSTEM FÜR INTELLIGENTES ENDGERÄT
PROCÉDÉ ET SYSTÈME DE COMMANDE DE DISPOSITIF TERMINAL INTELLIGENT

(30) Priority: 18.04.2013 CN 201310136307
(43) Date of publication of application: 02.03.2016
(73) Proprietor: Xiaomi Inc., Beijing 100085 (CN)
(72) Inventor: ZHANG, Xu, Beijing 100085 (CN)
(74) Representative: Cabinet Beau de Loménie
(86) International application number: PCT/CN2013/085942
(87) International publication number: WO 2014/169609

(56) References cited:
- CN-A- 101 211 650
- CN-A- 102 104 388
- CN-A- 103 024 193
- CN-A- 103 257 873
- CN-U- 202 034 054
- KR-A- 20130 014 752
- US-A1- 2012 244 812

## Description

### TECHNICAL FIELD

The present application relates to a smart terminal technology, and more particular to a method for controlling a smart terminal device and a system thereof.

### BACKGROUND

Smart terminal devices are such smart devices with multimedia functions, which can support audio, video, data, or the like. For example, a visual telephone, a conference terminal, Personal Computer (PC) with a built-in multimedia function, Personal Digital Assistant (PDA), and so on belong to the smart terminal device.

With the rapid popular of smart terminal devices, the devices can bring a more and more perfect video-audio experience and thus become important recreational devices when people travels.

In a case of mobile application, a user generally listens to multimedia contents by wearing an earphone, for example listening to the playing audio, visual or game using the earphone. On the other hand, with the development of audio and video communication based on mobile Internet, the earphone is often used by people for audio communication and video communication.

However, in some emergency cases, the user generally takes off the wear earphone in a hurry so as to forget or have no time to stop playing multimedia content, which may lead to a mistake in the playing audio, video or game and a waste of electric energy. If the user wants to stop playing multimedia, it is required to go to an operation interface of the smart terminal so that the user can press a pause button. For example, for a wired earphone, it is required to either press a pause button with a play control function in the wire control thereof or directly unplug the earphone from the terminal device to pause the playing; and for a wireless earphone, it is required to press a switch on the earphone or a pause button in a play interface.

In addition, in some emergency cases, it is required for a user to switch among a earphone mode, a speaker mode and a hand-free mode during the audio communication and the video communication. However, it is still required for the switch to manually perform plugging on a wired earphone plug or turn on/off the connection of a wireless earphone.

Thus, the above manual operations are cumbersome, and the frequent mechanical operations easily cause the wear and aging of a switch, a plug and a socket of the earphone.

Document US 2012/0244812 discloses a system and a method for automatically routing sensory data such as audio communications to peripheral devices such as headsets from host devices such as mobile phones.

### SUMMARY

Compared with the prior art, the embodiments of the present invention may at least include the following advantages.

The wear state of receiver of the earphone connected to the smart terminal device may be detected in real time, and then the application may be automatically controlled according to the wear state of the receivers. Accordingly, in the embodiment of the present invention, the running state of a corresponding application and the operation mode of the smart terminal device may be automatically controlled only by detecting the actions of wearing and taking off the receivers without performing manual control operations, so that operations with respect to an earphone may be simplified, service life of the mechanism member of the earphone may be increased, and electric energy of the smart terminal device may be saved.

It should be understood that the descriptions both in general above and in details hereinafter are only exemplary, rather than to limit the present invention.

The invention is as defined by independent claims 1 and 8. Particular embodiments of the invention are present in the dependent claims.

Therefore, embodiments and figures not covered by the claims are outside the scope of protection as defined in the claims. However, they are included here because they are useful for contributing to the understanding of the invention.

### BRIEF DESCRIPTION OF THE DRAWINGS

FIG. 1 is an exemplary flow chart of a method for controlling a smart terminal device according to a first embodiment of the present invention;
FIG. 2 is an exemplary flow chart of a method for controlling a smart terminal device according to a second embodiment of the present invention;
FIG. 3 is an exemplary diagram showing an internal structure of an earphone according to the prior art;
FIG. 4 is an exemplary diagram showing an internal structure of an earphone according to a second embodiment of the present invention;
FIG. 5 is an exemplary flow chart of a method for controlling a smart terminal device according to a third embodiment of the present invention;
FIG. 6 is an exemplary block diagram showing a system for controlling a smart terminal device according to a fourth embodiment of the present invention;
FIG. 7 is an exemplary block diagram showing a system for controlling a smart terminal device according to a fifth embodiment of the present invention.

Some specific embodiments of the present invention are illustrated through the above mentioned drawings, followed by description in more detail hereinafter. Such drawings and description are provided to explain the concept of the present invention for those skilled in the art with reference to particular embodiments, rather than to limit the scope of the disclosed conception in any manner.

### DESCRIPTION OF THE EMBODIMENTS

In order to clearly understand the above objects, features and advantages of the embodiments of the present invention, hereafter, the embodiments of the present invention will be described in detail by some specific implements with reference to the appending drawings.

According to the embodiments of the present invention, a smart terminal device can be automatically controlled to perform a corresponding operation according to the wear state of receivers of an earphone connected to the smart terminal device. Thus, some cumbersome manual operations may be avoided and the service life of the earphone may be increased. Meanwhile, the electric energy waste of the smart terminal device due to forgetting to perform a manual operation may be avoided.

In the embodiments of the present invention, the smart terminal device may be a smart terminal device with multimedia functions, which can support audio, video, data, and so on. For example, the smart terminal may be a mobile phone, a player or a game machine, a videophone, a conference terminal, PC with a built-in multimedia function, PDA, and so on.

### First embodiment

Currently, when an earphone is used in a smart terminal device, if the receiver of the earphone is wore or taken off, it is required to manually control running states of some applications in the terminal device or operation mode of the smart terminal device. However, the manual operation is very cumbersome and the frequent mechanical operations easily lead to abrasion and aging of a switch, a plug, and a socket of the earphone. Furthermore, in a case of forgetting to perform the manual operation, a mistake may be occurred in run process of an application and the electric energy waste of the device may be caused.

Aiming at the above problems, an embodiment of the present invention provides a method for controlling a smart terminal device, which can automatically control the smart terminal device to perform a corresponding operation according to various wear states of receivers of an earphone connected to the smart terminal device.

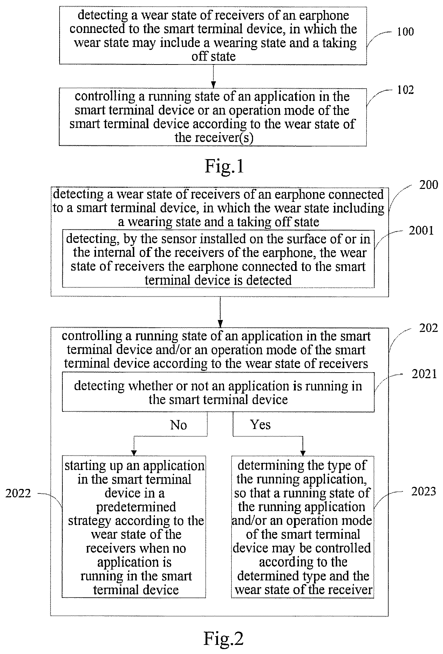

Referring to Fig.1, it illustrates a flow chart of a method for controlling a smart terminal device according to the first embodiment of the present invention, which may include:
Step 100: a wear state of receivers of an earphone connected to the smart terminal device is detected, in which the wear state may include a wearing state and a taking off state.

In the embodiment of the present invention, the above earphone connected to the smart terminal device may be a wireless earphone (including a Bluetooth earphone, etc.), or a wired earphone, which is not limited in the invention.

In the embodiment of the present invention, the smart terminal device may be controlled to perform different operations according to the different wear states of the earphone connected to the smart terminal device. Accordingly, the wear state of the earphone connected to the smart terminal device may be firstly detected, in which the wear state may include two states, i.e., the wearing state and the taking-off state.

Herein, for such an earphone (wired or wireless) with left and right receivers, when it is detected that at least one of the receivers is in the wearing state, it is considered that the earphone is in the wearing state, and when it is detected that both of the receivers are taken off, it is considered that the earphone is in the taking-off state. For such an earphone with one receiver, the wearing or taking off state of the one receiver indicates the wear state of the earphone.

Step 102: a running state of an application in the smart terminal device or an operation mode of the smart terminal device is controlled according to the wear state of the receiver(s).

In the embodiment of the present invention, the running state of application in the smart terminal device or the operation mode of the smart terminal device may be correspondingly controlled according to the detected wear state of the receiver(s).

The above-mentioned application in the smart terminal device may be a rich media application including various multimedia applications and game applications, or a communication application including audio, video, and so on. The running state of the application may include an un-playing state and a playing state; and the operation mode of the smart terminal device may include a earphone mode (e.g., wearing the receiver of the earphone when an application is run), a phone receiver mode (e.g., taking off the receivers of the earphone when a voice communication is performed), a hand-free mode (e.g., taking off the receivers of the earphone when a video communication is performed), a speaker mode (e.g., taking off the receivers of the earphone when a rich media content is played), and so on.

For example, if the current running state of the rich media application in the smart terminal device is the playing state and the smart terminal device is in the speaker mode, the smart terminal device may be controlled to be automatically switched to the earphone mode when it is detected that the receiver of the earphone is worn, that is, a user may listen to the playing rich media content through the earphone without performing a manual switch among modes.

It should be illustrated that the term "and/or" may be understood that the embodiments of the present invention are not limited to the above two cases, i.e., to separately control the running state of the application in the smart terminal device and to separately controlling the operation mode of the smart terminal device. As needed, the control of the running state and the control of the operation mode may be combined according to the wear state of the receivers, that is, the running state of the application in the smart terminal device and the operation mode of the smart terminal device may be simultaneously controlled. Hereafter, these specific cases will be discussed in detail in the following embodiments.

It should be understood that the control process is only exemplary, and the specific control process will be described in detail in the following embodiments.

Accordingly, in the embodiments of the present invention, the running state of the corresponding application or the operation mode of the smart terminal device may be automatically controlled only by detecting the actions of wearing and taking off receivers of the earphone without manually performing a control operation, so that operations performed when the wear state of the receivers of the earphone is changed may be simplified, service life of the mechanism member of the earphone may be improved, and electric energy of the smart terminal device may be saved.

### Second embodiment

In the second embodiment, the method for controlling a smart terminal device will be described in detail.

Referring to Fig.2, it illustrates a flow chart of a method for controlling a smart terminal device according to the second embodiment of the present invention, which may include:
Step 200: a wear state of receivers of an earphone connected to a smart terminal device is detected, the wear state including a wearing state and a taking off state.

In the embodiment of the present invention, it is determined, by analyzing a structure of a currently used earphone, that the wear state of the earphone connected to the smart terminal device may be detected via a sensor installed on the earphone.

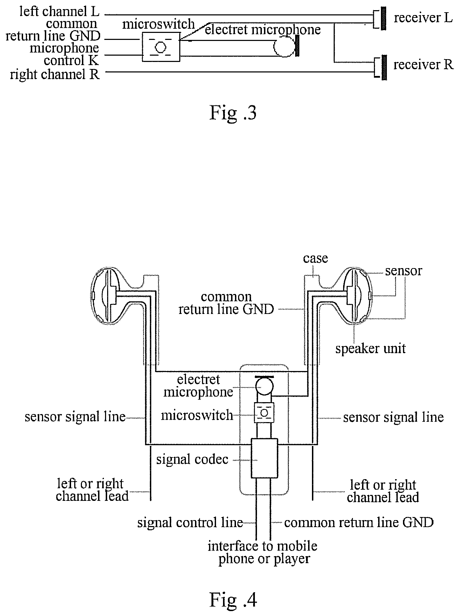

In the conventional technology, a microswitch of a wired or wireless earphone is a peripheral member for controlling the play of multimedia content, game, communication, and so on. As shown in Fig.3, it illustrates an internal structure of a conventional earphone.

The microswitch in Fig.3 may control the operations such as playing multimedia content, running a game, performing communication. If the microswitch is clicked when the terminal device is used for pausing or playing, the device may receive an instruction to continue playing or pausing. If the microswitch is clicked during the communication of the terminal device, the device may receive an instruction to receive or hang off a call. The other situation is similar to this.

However, in the prior art, the microswitch of the wired or wireless earphone controls the play of multimedia, game, communication only by manual operations, while the frequent mechanical operations easily lead to abrasion and aging of a switch, a plug and a socket of the earphone, and the manual operations are very cumbersome.

Aiming at the above problems, the embodiment of the present invention proposes that the sensor detects the wear state of receivers of the earphone in real time, and thus the smart terminal device may be automatically controlled to perform a corresponding operation according to different wear states.

Referring to Fig.4, it illustrates an internal structure of an earphone according to the second embodiment of the present invention. As shown in Fig.4, in the embodiment of the present invention, the earphone may be provided with the sensor which can detect the wear state of the earphone in real time.

Therefore, step 200 may include:
sub-step 2001: the wear state of receivers the earphone connected to the smart terminal device is detected by the sensor installed on the surface of or in the internal of the receivers of the earphone.

In the embodiment of the present invention, the sensor may include a camera sensor, a capacitive electrostatic sensor, a resistive pressure sensor, a piezoelectric sensor, an optical sensor, an infrared sensor, a distance sensor, and the combination thereof.

It should be understood that the above may include other type of sensor, which is not limited in the embodiments of the present invention.

An external signal may be sensed by the sensor on the surface of the receiver of the earphone or inside the receiver of the earphone, and thus the wear state of the receivers of the earphone, that is, whether the receiver of the earphone is worn or taken off, may be determined according to the sensed signal.

For the specific operations of the sensor, one of ordinary skill in the art may perform corresponding process based on practical experiences and thus the detailed description thereof will be omitted in the embodiment of the present invention.

Step 202: a running state of an application in the smart terminal device and/or an operation mode of the smart terminal device is controlled according to the wear state of receivers.

In the embodiment of the present invention, the running state of an application in the smart terminal device and/or the operation mode of the smart terminal device may be correspondingly controlled according to different wear states of the receivers.

Step 202 may further include:
sub-step 2021: it is detected whether or not an application is running in the smart terminal device.

If no application is running, the process proceeds to sub-step 2022; and if an application is running, the process proceeds to sub-step 2023.

As shown in Fig.4, in the embodiment of the present invention, a signal codec may be provided in an internal control part of the earphone. The signal codec may encode the signal detected by the sensor to generate a corresponding control instruction.

For example, when a signal is detected by the sensor, the signal may be transmitted to the signal codec via a sensor signal line, and then is encoded by the signal codec to generate the corresponding instruction, which is transmitted to the smart terminal device to control the smart terminal device to perform a corresponding operation.

Accordingly, in the embodiment of the present invention, the sub-step 2021 of detecting whether or not an application is running in the smart terminal device may include:
a1: the control instruction generated by a signal codec installed in the earphone is received;
a2: it is detected whether the application is running in the smart terminal device according to the control instruction.

For example, when the sensor detects an action of wearing or taking off the receiver of the earphone, the sensor transmits the detected signal to the signal codec via the sensor signal line, and the signal codec encodes the received signal to generate a control instruction. The smart terminal device may automatically detect whether or not an application is running in the smart terminal device according to the control instruction.

In addition, in the embodiment of the present invention, the signal codec may decode an instruction transmitted to the earphone by the smart terminal device, and control the sensor and other mechanism (e.g., earphone). For example, the instruction for adjusting the sensitivity of the sensor transmitted by the smart terminal device may be decoded, and then the sensitivity of the sensor may be adjusted according to the decoded instruction, of which further description will be omitted.

For functions of other parts in the earphone, one of ordinary skill in the art may perform a corresponding process according to practical experiences, of which detailed description will be omitted.

Sub-step 2022: an application in the smart terminal device is started in a predetermined strategy according to the wear state of the receivers when no application is running in the smart terminal device.

Herein, the application, which is not running in the smart terminal device, means that the smart terminal device is in a locked and sleeping state, or the smart terminal device is unlocked but the application related to playing or communication is closed.

In embodiment of the present invention, some strategies of starting up an application in the smart terminal device may be preset. For example, the sub-step 2022 may include three situations as below.

A first situation: when the receiver is in the wearing state, a desktop application in the smart terminal device may be controlled to be started up and displayed.

For example, when the sensor detects that the receiver of the earphone is worn by a user, if the smart terminal device (e.g., mobile phone, player, or game machine) is in the locked and sleeping state, the signal codec may firstly generate a waking instruction and the waking instruction is transmitted to the smart terminal device, and then the smart terminal device may be automatically waked and unlocked according to the waking instruction. After the smart terminal device is unlocked, the desktop application in the smart terminal device may be displayed so as to be selected for running.

A second situation: when the receiver is in the wearing state, the preset application in the smart terminal device may be controlled to be started up and displayed.

If a predetermined strategy is to automatically run a certain application (which may be preset) when the receiver is worn, the preset application in the smart terminal device may be controlled to be started up when the receiver is in the wearing state.

In the embodiment of the present invention, the application may include a rich media application and a communication application. For example, if the application, which is preset to run when the receiver is worn, is a communication application, a control instruction may be generated when the receiver is in the wearing state, and the smart terminal device may automatically run the communication application according to the control instruction(e.g., automatically opening a contact). For example, according to the settings from the user, when the receiver is in the wearing state, the smart terminal device may automatically run the rich media application related to the earphone, such as a music player, a video player or a game.

A third situation: when the receiver is in the wearing state, the display interface may be controlled to display a list of applications and an application selected by the user from the list of applications may be started up. Here, the list of applications may be a list of rich media applications or a list of communication applications.

For example, the list of rich media applications may include two lists as below.
(1) if a plurality of rich media applications are preset, the display interface may be controlled to display the preset list including the plurality of rich media applications and the application selected by the user from the list of rich media applications may be started up.
(2) if there is no preset rich media application, in the embodiment of the present invention, the smart terminal device may be automatically controlled to sort respective rich media applications according to the predetermined strategy (e.g., the number of uses, last using time), display the sorted list including the plurality of rich media applications, and start up the application selected by the user from the list of rich media applications.

Sub-step 2023: when an application is running in the smart terminal device, the type of the running application is determined, and a running state of the running application and/or an operation mode of the smart terminal device is controlled according to the determined type and the wear state of the receiver.

In the embodiment of the present invention, if an application is running in the smart terminal device, the running state of the running application or the operation mode of the smart terminal device may be controlled according to the type of the application and the wear state of the receiver.

The sub-step 2023 may include four situations as below.

### First situation

When the running application is a rich media application, if the receiver is in the wearing state, it is determined whether the running application is in a first running state; and if yes, the running application may be controlled to be switched from the first running state to a second running state.

In the embodiment of the present invention, the first running state is an un-playing state, and the second running state is a playing state. For example, in the case that the running application is the rich media application, if it is detected that the receiver is in the wearing state and the rich media application is the un-playing state (e.g., a pause state), the smart terminal device may automatically switch the rich media application from the un-playing state to the playing state according to a control instruction.

It should be illustrated that in the wearing state, the operation mode of the smart terminal device is set by default as the earphone mode. Thus, in the case that the running application is the rich media application, if the receiver is in the wearing state and the running state is the second running state (i.e., the playing state), the smart terminal mode uses the earphone mode. If the receiver is switched from the taking-off state to the wearing state and the operation mode is the speaker mode in the taking off state, the operation mode of the smart terminal device is switched to the earphone mode after the above state switch is performed.

### Second situation

In the case that the running application is a rich media application, if the wear state of the receiver is a taking-off state, a running state of the running application may be determined; if the running state is the second running state, the running application may be controlled to be switched from the second running state to the first running state; and if the running state is the first running state, the running application may be controlled to be switched from the first running state to the second running state, and the operation mode of the smart terminal device may be controlled to be switched to the first operation mode.

For example, when the sensor detects the receiver of the earphone is in the taking off state, if the rich media application in the smart terminal device is in the playing state, the smart terminal device receives a control instruction transmitted from the earphone so as to automatically pause the playing (that is, the running state of the rich media application is switched from the playing state to the un-playing state); if the rich media application in the smart terminal device is in the un-playing state, the smart terminal device receives an instruction of continuing the play triggered by a user (e.g., the user controls a switch of the earphone and clicks a play button in a play interface), so that the running state of the smart terminal device is switched from the un-playing state to the playing state, and the operation mode of the smart terminal device is switched to the first operation mode (i.e., the speaker mode) so that an internal speaker in the smart terminal device may continue playing the rich media content.

### Third situation

When the running application is the communication application, if the receiver is in the wearing state, the smart terminal device is controlled to be switched to a second operation mode, or it is determined whether the running state is the first running state; and if yes, the running application may be controlled to be switched from the first running state to the second running state.

In the embodiment of the present invention, the second operation mode may be the earphone mode. In the case of running the communication application (which may be an audio communication or a video communication), if the receiver is in the wearing state, the smart terminal device may be controlled to be switched to the earphone mode, i.e., to be used for communicating via the earphone.

In addition, in a certain communication application (for example, Webchat communication), the communication contents are transmitted in a form of audio clip which may be controlled to be played or paused. In such case, if the receiver is in the wearing state and the communication application is detected to be in the first running state (i.e., the un-playing state), the running application may be controlled to be switched from the first running state to the second running state (i.e., playing state) so as to continue playing the communication content. At this time, the smart terminal device uses the earphone mode by default.

### Fourth situation

When the running application is the communication application, if the receiver is in the taking-off state, the smart terminal device may be controlled to be switched to a third operation mode, or it is determined whether the running application is in the second running state; and if yes, the running application may be controlled to be switched from the second running state to the first running state.

In the embodiment of the present invention, the third operation mode may be varied according to various types of communication.

For example, when the user is wearing the earphone to receive an audio communication, if the sensor detects that the user takes off the receiver of the earphone, the smart terminal device may be automatically switched to the phone receiver mode upon receiving the control instruction from the earphone, and the user may directly put the receiver of the terminal device to the ear so as to continue the audio communication.

When the user is wearing the earphone to receive a video communication, if the sensor detects that the user takes off the receiver of the earphone, the smart terminal device may be automatically switched to the hand-free mode upon receiving the control instruction from the earphone, and the user may directly use a speaker of the terminal device to continue the video communication.

In addition, in some communication applications (e.g., a Webchat communication application), if the receiver is in the taking-off state and it is detected that the communication application is in the second running state (i.e., the playing state), the running application may be controlled to be switched from the second running state to the first running state (i.e., the un-playing state) so as to pause the playing of the information content.

It should be illustrated that the controlling the running application to be switched from the first running state to the second running state may include the following cases:
(i) when there is only one running application, the running application may be controlled to be switched from the first running state to the second running state;
(ii) when there are two or more running applications, a list of running applications may be provided to the user, and an application selected from the list of running applications by the user may be controlled to be switched from the first running state to the second running state.

If there are two or more applications in the first running state, a corresponding list of running applications may be generated, so that the priority of the applications in the list may be sorted according to the predetermined strategy (e.g., last using time), and the user may select the corresponding application by clicking to make it switched from the first running state to the second running state.

Accordingly, the embodiment of the present invention provides a method for controlling a smart terminal device, which is capable of detecting a signal via the sensor installed in the earphone, encoding the signal by the signal codec to generate the corresponding control instruction and transmitting the control instruction to the smart terminal device. Therefore, the smart terminal device may automatically control the running state of the application in the smart terminal device or the operation mode of the smart terminal device according to the control instruction without performing a cumbersome manual operation.

### Third embodiment

In the embodiment of the present invention, it will be described in detail how to control the smart terminal device to perform a corresponding operation according to a wear state of receiver of the earphone.

The embodiment of the present invention is described by taking a wired earphone (including two receivers) as an example. The running application in the smart terminal device may include rich media applications and communication applications. The rich media application may include multimedia applications and game applications, and the communication application may include audio communication applications and video communication applications (also includes a Webchat application, as for this, the embodiment does not give further detailed description).

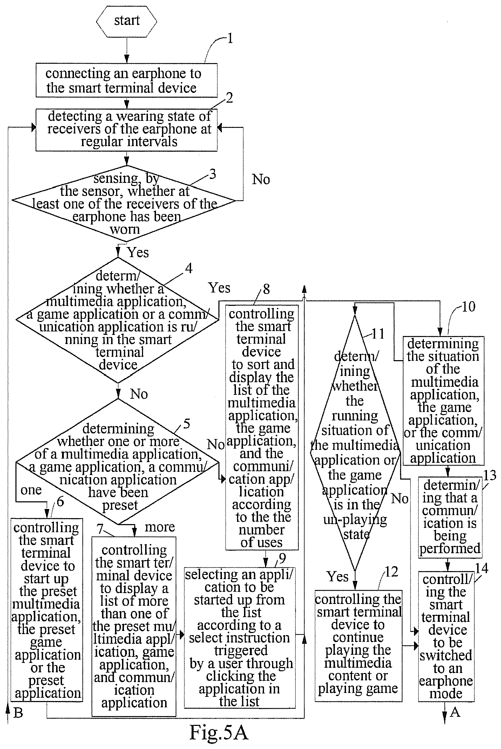

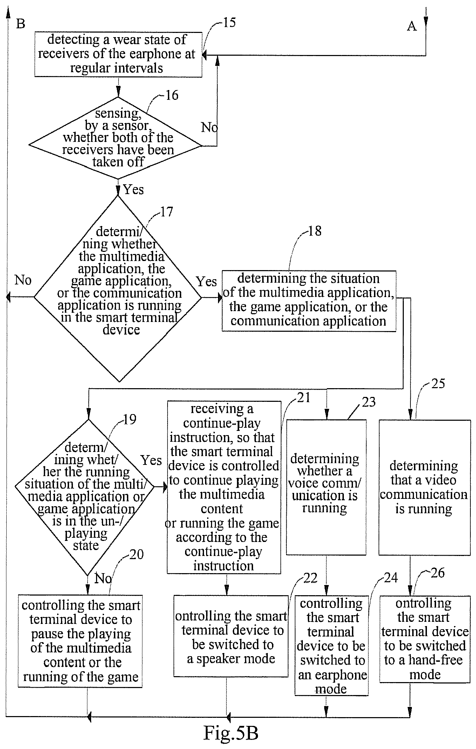

Referring to Fig.5, it illustrates a flow chart of a method of controlling a smart terminal device according to the third embodiment of the present invention, which may include the following steps.

Step 1: an earphone is connected to the smart terminal device.

In the embodiment of the present invention, the earphone may be connected to the smart terminal device firstly, for example, an wired earphone is plugged into the smart terminal device (for example, a mobile phone, a player, or a game machine), or an wireless earphone is connected to the smart terminal device.

Step 2: a wearing state of receivers of the earphone is detected at regular intervals.

After the earphone is connected to the smart terminal device, the smart terminal device detects whether the user is wearing the receivers of the earphone through a sensor in the earphone.

In the embodiment of the present invention, the wear state of the receivers of the earphone may be detected by the sensor at regular intervals. The embodiment of the present invention does not limit the specific time of the intervals.

Step 3: it is sensed whether at least one of the receivers of the earphone has been worn by the sensor.

If yes, the process proceeds with step 4; otherwise the process returns to step 2.

In step 4, it is determined whether a multimedia application, a game application or a communication application is running in the smart terminal device.

If yes (i.e., the multimedia application, the game application or the communication application is running), the process proceeds with step 10 ; otherwise (i.e., no multimedia application is started up to play multimedia contents, no game application is started up to run a game, and no communication application is started up for communication) the process proceeds with step 5.

Step 5: it is determined that whether one or more of the multimedia application, the game application, and the communication application have been preset.

The process proceeds with step 6 if one of the multimedia application, the game application and the communication application is preset; the process proceeds with step 7 if more than one of the multimedia application, the game application and the communication application are preset; and the process proceeds with step 8 if each of the multimedia application, the game application and the communication application is not preset.

Step 6: the smart terminal device is controlled to start up the preset multimedia application, the preset game application or the preset application.

In the embodiment of the present invention, if the multimedia application, the game application or the communication application is preset, the preset application is started up and then the process proceeds with step 10 if it is detected that at least one of the receivers of the earphone has been worn while no multimedia application is started up to play multimedia contents, no game application is started up to run a game, and no communication application is started up for communication.

Step 7: the smart terminal device is controlled to display a list of more than one of the preset multimedia applications, game applications, and communication applications.

If more than one of the multimedia applications, game applications, and communication applications are preset, the smart terminal device may be controlled to display the list of more than one of these preset applications, the more than one of these preset applications may be sorted according to a predetermined strategy (e.g., the number of uses). Thereafter, the process proceeds to step 9, i.e., to select an application from the list according to a select instruction triggered when a user clicks the application in the list.

Step 8: the smart terminal device is controlled to sort and display the list of the multimedia applications, the game applications, and the communication applications according to the number of uses.

In the embodiment of the present invention, if each of the multimedia application, the game application and the communication application is not preset, the smart terminal device may be automatically controlled to sort respective applications according to the number of uses thereof and display the list of the sorted multimedia applications, game applications and communication applications. Then, the process proceeds to step 9, i.e., to select the application to be started up from the list according to the select instruction triggered then the user clicks the application in the list.

Step 9: the application is selected to be started up from the list according to the select instruction triggered when the user clicks the application in the list.

Step 10: it is determined that the situation of the multimedia application, the game application, or the communication application.

When it is determined in step 4 that the multimedia application, the game application, or the communication application is running in the smart terminal device, the situation of the multimedia application, the game application, or the communication application may be further determined and then the smart terminal device may be controlled to perform a corresponding operation according to the situation of the multimedia application, the game application, the communication application.

If it is determined that the multimedia application or the game application is running, the process proceeds with step 11; and if it is determined that the communication application is running, the process proceeds with step 13.

Step 11: it is determined whether the running situation of the multimedia application or the game application is in the un-playing state.

If yes, the process proceeds with step 12; if the running situation of the multimedia application or the game application is in the playing state, the process proceeds with step 14.

Step 12: the smart terminal device is controlled to continue playing the multimedia content or playing game, and the process proceeds with step 14.

Step 13: it is determined that a communication is being performed, the process proceeds with step 14.

Step 14: the smart terminal device is controlled to be switched to the earphone mode, and the process proceeds with step 15.

Step 15: the wear state of receivers of the earphone is detected at regular intervals.

Step 16: the sensor senses whether two receivers have been taken off.

If yes, the process proceeds with step 17; otherwise the process proceeds with step 15.

Step 17: it is determined whether the multimedia application, the game application, or the communication application is running in the smart terminal device.

If yes, (i.e., the multimedia application, the game application, or the communication application is running in the smart terminal device), the process proceeds with step 18; and if no, (i.e., no multimedia application is started up to play the multimedia content, no game application is started up to run game, or no communication application is started up for communication) the process returns to step 2.

Step 18: the situation of the multimedia application, the game application, or the communication application is determined.

When it is determined in step 17 that the multimedia application, the game application, or the communication application is running in the smart terminal device, the situation of the multimedia application, the game application, or the communication application may be further determined, and then the smart terminal device is controlled to perform a corresponding operation according to the determined situation of the multimedia application, the game application, or the communication application.

If it is determined that the multimedia application or the game application is running, the process proceeds with step 19; if it is determined that a voice communication is running, the process proceeds with step 23; and if it is determined that a video communication is running, the process proceeds with step 25.

Step 19: it is determined whether the running situation of the multimedia application or the game application is in the un-playing state.

If yes, the process proceeds with step 21; and if the running situation of the multimedia application or the game application is in the playing state, the process proceeds with step 20.

Step 20: the smart terminal device is controlled to pause the playing of the multimedia content or the running of the game, and the process returns to step 2.

Step 21: a continue-play instruction is received, and the smart terminal device is controlled to continue playing the multimedia content or running the game according to the continue-play instruction.

In the embodiment of the present invention, the continue-play instruction may be triggered when the user clicks a continue-play button, and may be triggered in other form, which is not limited in the embodiment of the present invention.

Step 22: the smart terminal device is controlled to be switched to the speaker mode, and the process returns to step 2.

Step 23: it is determined that the voice communication is running, and the process proceeds with step 24.

Step 24: the smart terminal device is controlled to be switched to the earphone mode, and the process returns to step 2.

Step 25: it is determined that the video communication is running, and the process proceeds with step 26.

Step 26; the smart terminal device is controlled to be switched to the hand-free mode, and the process returns to step 2.

Hereafter, the method for controlling a smart terminal device according to the embodiment of the present invention will be explained by the following four usage scenarios.

### First usage scenario

When the sensor senses that the user wears the earphone, if the smart terminal device (e.g., a mobile phone, a player, or a game machine, etc.) is in the locked and sleeping state, the signal codec may firstly generate the waking instruction and transmit the waking instruction to the smart terminal device, and the smart terminal device may be controlled to be automatically unlocked according to the waking instruction (if there is a password on lock screen, an input box may be popped up firstly). Then, the signal codec generates the wear control instruction so as to control the smart terminal device to automatically start up the multimedia application, the game application or the communication application according to the settings preset by the user, or display the list of these applications (in the list, the priority of these applications may be sorted according to the preset settings and the number of uses so that the user may start up a corresponding application by selection).

If the screen of the smart terminal device has been unlocked and no application with respect to the playing and the communication is started up (e.g., no multimedia application is started up to play multimedia content, no game application is started up to run game, and no communication application is started up for communication), the signal codec generates the wear control instruction and controls the smart terminal device to perform a startup operation.

The first usage scenario may correspond to steps 5-9 in Fig.5, and of which the detailed process will be omitted in the embodiment of the present invention.

### Second usage scenario

When the sensor senses that the user wears the earphone, if the smart terminal device is in a state of pausing the multimedia content (for example, music, video) or pausing a game, the smart terminal device receives the wear control instruction transmitted from the earphone to automatically continue the playing of the multimedia content or the running of the game.

The above usage scenario may correspond to steps 11-12 in Fig.5.

When the sensor senses that the user wears the earphone, if the smart terminal device is in a state of playing the multimedia content (for example, music, video) or running a game, the smart terminal device receives the taking-off control instruction transmitted from the earphone to automatically pause the play of the multimedia content or the running of the game. At this time, the user may continue playing the multimedia content or running the game through a switch in the earphone or a play button on a play interface, and an internal speaker in the smart terminal device.

The above usage scenario may correspond to steps 19-22 in Fig.5.

Additionally, if two or more of the multimedia contents or games are paused, a play list may be correspondingly generated in which the priority of these multimedia contents or games is sorted according to the last using time by the user, so that the user may continue playing the corresponding multimedia content or game by a click selection.

### Third usage scenario

When the user wearing the earphone is receiving an audio communication, if the sensor detects that the user takes off the earphone, the smart terminal device receives the taking-off control instruction transmitted from the earphone and then is automatically switched to the earphone mode, so that the user may continue receiving the audio communication by directly putting the receiver of the device to the ear.

The above usage scenario may correspond to steps 23-24 in Fig.5.

### Fourth usage scenario

When the user wearing the earphone is receiving a video communication, if the sensor detects that the user takes off the earphone, the smart terminal device receives the taking-off control instruction transmitted from the earphone and then is automatically switched to the hand-free mode, so that the user may continue performing the video communication directly by the speaker of the device.

The above scenario may correspond to steps 25-26 in Fig.5.

It should be understood that the present invention may include other usage scenarios. One of ordinary skill in the art may perform a corresponding process according to actual situations, which will not be further described hereinafter.

Accordingly, in the embodiment of the present invention, in various emergency scenarios the user may control the running of a related application just by simply wearing and taking off the receivers of the earphone. That is, by wearing or taking off the receivers of the earphone, the device may automatically control the playing of a multimedia content, a game, and a communication and control the switch among the respective operation modes according to different scenarios. Thus, the mistake in the playing contents or the game process and the electric energy waste of the device may be avoided when the user forgets or has no time to stop the playing of the multimedia content and game due to taking off the receiver of the earphone in hurry. Meanwhile, the respective modes may be automatically switched according to different scenarios, without plugging the wired earphone or turning on/off the wireless earphone by settings. The method provided by the embodiments of the present invention can provide a more humanization experience, by simplifying operation with respect to the earphone, increasing service life of the mechanism member of the earphone, and saving electric energy of the smart terminal device.

It should be illustrated that for a brief description, the above embodiments relating to methods are expressed as a series combination of actions. However, one of ordinary skill in the art should understand the invention is not limited by an order of the actions described herein, while some steps may be performed in other order or simultaneously according to the present invention. Secondly, one of ordinary skill in the art should also understand that the embodiments described in specification are the preferred embodiments, and thus the actions involved in this invention are not necessarily required.

### Fourth embodiment

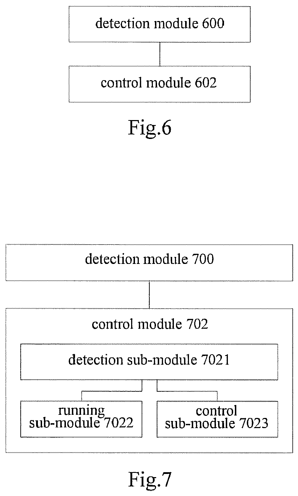

Referring to Fig.6, it illustrates a block diagram of a system for controlling a smart terminal device according to the fourth embodiment of the present invention, and the system may include a detection module 600 and a control module 602.

Herein, the detection module 600 may be configured to detect a wear state of receivers of an earphone connected to the smart terminal device, the wear state includes a wearing state and a taking-off state.

Herein, the detected earphone connected to the smart terminal device may be a wireless earphone or a wired earphone.

The control module 602 may be configured to control a running state of an application in the smart terminal device and/or an operation mode of the smart terminal device according to the wear state of the receivers.

According to the embodiment of the present invention, the wear state of the receivers of the earphone connected to the smart terminal device may be detected in real time, and then the application may be automatically controlled according to the wear state of the receivers. Accordingly, in the embodiment of the present invention, the running state of a corresponding application and the operation mode of the smart terminal device may be automatically controlled just by detecting the actions of wearing and taking off the receivers without performing a manual control operation, so that operations with respect to the earphone is simplified, service life of the mechanism member of the earphone is increased, and electric energy of the smart terminal device is saved.

### Fifth embodiment

Referring to Fig.7, it illustrates a block diagram of a system for controlling a smart terminal device according to the fifth embodiment of the present invention, and the system may include a detection module 700 and a control module 702.

Herein, the detection module 700 may be configured to detect a wear state of receiver of an earphone connected to the smart terminal device, the wear state includes a wearing state and a taking-off state.

In the embodiments of the present invention, the detection module may be configured to detect the wear state of the receivers of the earphone connected to the smart terminal device through a sensor installed in the surface of or inside the receivers of the earphone.

Herein, the sensor includes at least one of a camera sensor, a capacitive electrostatic sensor, a resistive pressure sensor, a piezoelectric sensor, an optical sensor, an infrared sensor, and a distance sensor.

The control module 702 may be configured to control a running state of an application in the smart terminal device and/or an operation mode of the smart terminal device according to the wear state of the receivers.

The control module 702 may include a detection sub-module 7021, a running sub-module 7022, and a control sub-module 7023.

Herein, the detection sub-module 7021 may be configured to detect whether or not an application is running in the smart terminal device.

The detection sub-module 7021 may include:
a receiving subunit configured to receive a control instruction generated by a signal codec installed in the earphone; and
a detection subunit configured to detect whether or not an application is running in the smart terminal device according to the control instruction.

The running sub-module 7022 may be configured to start up an application in the smart terminal device according to a predetermined strategy based on the wear state of the receivers when the detection subunit detects that no application is running in the smart terminal device.

The running sub-module 7022 may include:
a first application running subunit configured to control to start up and display a desktop application when the wear state of the receivers is the wearing state,; or
a second application running subunit configured to control to start up an application preset in the smart terminal device when the wear state of the receivers is the wearing state; and
a third application running subunit configured to control a display interface to display a list of applications and start up an application selected by a user from the list of applications when the wear state of the receivers is the wearing state.

The control sub-module 7023 may be configured to determine a type of the running application when an application is running in the smart terminal device, and control a running state of the running application and/or the operation mode of the smart terminal device according to the determined type and the wear state of the receivers.

The control sub-module 7023 may include:
a first rich media switch subunit configured, when the running application is a rich media application, to determine whether the running application is in a first running state if the wear state of the receivers is the wearing state; and to control the running application to be switched from the first running state to a second running state if the running application is in the first running state;
a second rich media switch subunit configured, when the running application is a rich media application, to determine the running state of the running application if the wear state of the receivers is the taking-off state; to control the running application to be switched from the second running state to the first running state if the running application is in the second running state; and to control the running application to be switched from the first running state to the second running state and control the smart terminal device to be switched to a first operation mode if the running application is in the first running state;
a first communication switch subunit configured, when the running application is a communication application, to control the smart terminal device to be switched to the second operation mode or determine whether the running state is in the first running state if the wear state of the receivers is the wearing state; and to control the running application to be switched from the first running state to the second running state if the running application is in the first running state;
a second communication switch subunit configured, when the running application is a communication application, to control the smart terminal device to be switched to a third operation mode or determine whether the running state is in the second running state if the wear state of the receivers is the taking-off state;, and to control the running application to be switched from the second running state to the first running state if the running application is in the second running state.

It may include the follows that the running application is controlled to be switched from the first running state to the second running state:
when there in only one running applications, the running application is controlled to be switched from the first running state to the second running state; and
when there are two or more running applications, a list of the running applications may be provided and an application selected by the user from the list of the running applications may be controlled to be switched from the first running state to the second running state.

The embodiment of the present invention may employ any form of wired earphone or wireless earphone, for example, an earbud earphone, an insert type earphone, a headphone, a circumaural earphone, and so on. By adding the sensor or the combination of several sensors on the surface of earphone or inside the earphone, the smart terminal device may sense whether the user wears the receivers of the earphone through the sensor; and then, for different scenarios, the running of an application and the operation mode may be controlled to be switched just by simply wearing and taking off the receivers of the earphone to, so as to simplify the operations procedure.

Since the embodiments of the system are similar with the embodiments of the method, the description thereof is simplified and the same part may refer to the embodiment of the method.

It should be noted that in the embodiments of the present invention, a signal generated when the sensor senses that the user wears and takes off the receivers of the earphone passes through the signal codec to generate the encoded instruction to be transmitted to the smart terminal device. At this time, a corresponding control may be performed according to the current specific situation of the smart terminal device, while a common earphone interactive operation mode is still followed during the whole process that the user wears or takes off the receivers of the earphone.

In this specification, the respective embodiments are described in a progressive manner, and each of the embodiments describes a focus different from that of the other embodiment. Thus, the same parts between the respective embodiments may refer to each other.

One of ordinary skill in the art easily thinks of: it is feasible to make any combination of these applications in each of the above embodiments, and thus any combination of the above respective embodiments is of the embodiments of the present invention. As space is limited, the present specification does not give a detailed description.

The present invention may be described in the general context of computer-executable instructions executed by a computer such as program modules. Generally, the program modules may include routines, programs, objects, components, data structures, etc. performing particular tasks or implementing particular abstract data types. The present invention may be also be implemented in a distributed computing environment, in which the tasks may be performed by remote processing devices connected to each other via a communication network. In a distributed computing environment, the program modules may be located in the local and remote computer storage media including a storage device therein.

Finally, it should be noted that the terms herein representing relationships such as first and second is only used to distinguish an entity or operation from another entity or operation, but do not necessarily require or imply these entities or operation existing in the actual relationship or order.

The method for controlling a smart terminal device and system thereof provided by the present invention are described in detail above, and the principle and embodiments of the present invention are explained by some specific examples. However, the above description of the embodiments is only used to help understand the method. Meanwhile, one of ordinary skill in the art may make any modification in the specific embodiments and application scope, according to the concept of the present invention.

## Claims

1. A method for controlling a smart terminal device, **characterized in that** the method comprises:
detecting (110, 200) a wear state of receivers of an earphone connected to the smart terminal device, wherein the wear state comprises a wearing state corresponding to the earphone being worn by a user of the smart terminal device and a taking-off state corresponding to the earphone being taken off by the user; and
controlling (102, 202) a running state of an application in the smart terminal device according to the wear state of the receivers;
wherein controlling a running state of an application in the smart terminal device according to the wear state of the receivers comprises:
detecting (2021) whether or not an application is running in the smart terminal device;
starting up (2022), if no, an application in the smart terminal device according to a predetermined strategy according to the wear state of the receivers;
determining (2023), if yes, a type of the running application, so that the running state of the running application is controlled according to the determined type and the wear state of the receivers.

2. The method of claim 1, further comprising controlling an operation mode of the smart terminal device according to the wear state of the receivers.

3. The method of claim 1 or 2, wherein starting up, if no, an application in the smart terminal device in a predetermined strategy according to the wear state of the receivers comprises:
controlling, when the wear state of the receivers is the wearing state, to start up and display a desktop application; or
controlling, when the wear state of the receivers is the wearing state, to start up an application preset in the smart terminal device; or
controlling, when the wear state of the receivers is the wearing state, a display interface to display a list of applications, so that an application selected by a user from the list is started up.

4. The method of claim 1 or 2, wherein determining, if yes, a type of the running application, so that the running state of the running application is controlled according to the determined type and the wear state of the receivers comprises:
determining, when the running application is a rich media application, wherein rich media applications include multi media applications and game applications, whether the running application is in a first running state if the wear state of the receivers is the wearing state, wherein if yes, the running application is controlled to be switched from the first running state to a second running state;
determining, when the running application is a rich media application, the running state of the running application if the wear state of the receivers is the taking-off state, wherein the running application is controlled to be switched from the second running state to the first running state if the running application is in the second running state, and the running application is controlled to be switched from the first running state to the second running state and the smart terminal device is controlled to be switched to a first operation mode if the running application is in the first running state;
controlling the smart terminal device to be switched to the second operation mode or determining whether the running state is in the first running state, when the running application is a communication application and the wear state of the receivers is the wearing state, wherein the running application is controlled to be switched from the first running state to the second running state if the running application is in the first running state; and
controlling the smart terminal device to be switched to a third operation mode or determining whether the running state is in the second running state, when the running application is a communication application and the wear state of the receivers is the taking-off state, wherein the running application is controlled to be switched from the second running state to the first running state if the running application is in the second running state.

5. The method of claim 4, **characterized in that**, controlling the running application to be switched from the first running state to the second running state comprises:
controlling, when only one application is running, the running application to be switched from the first running state to the second running state; and
providing, when two or more running applications are running, a list of the running applications, so that an application selected by the user from the list is controlled to be switched from the first running state to the second running state.

6. The method of claim 1, wherein detecting a wear state of receivers of an earphone connected to the smart terminal device comprises:
detecting the wear state of the receivers of the earphone connected to the smart terminal device through a sensor installed in surface of or inside the receivers of the earphone;
wherein the sensor comprises at least one of a camera sensor, a capacitive electrostatic sensor, a resistive pressure sensor, a piezoelectric sensor, an optical sensor, an infrared sensor, and a distance sensor.

7. The method of claim 1, wherein detecting whether or not an application is running in the smart terminal device comprises:
receiving a control instruction generated by a signal codec installed in the earphone; and
detecting whether or not an application is running in the smart terminal device according to the control instruction.

8. A system for controlling a smart terminal device, **characterized in that**, the system comprises:
a detection module (600, 700) configured to detect a wear state of receivers of an earphone connected to the smart terminal device, wherein the wear state comprises a wearing state corresponding to the earphone being worn by a user and a taking-off state corresponding to the earphone being taken off by the user; and
control module (602, 702) configured to control a running state of an application in the smart terminal device according to the wear state of the receivers;
wherein the control module comprises:
a detection sub-module (7021) configured to detect whether or not an application is running in the smart terminal device;
a running sub-module (7022) configured to start up an application in the smart terminal device in a predetermined strategy according to the wear state of the receivers when the detection sub-module detects that no application is running in the smart terminal device; and
a control sub-module (7023) configured to determine a type of the running application when an application is running in the smart terminal device, and to control a running state of the running application according to the determined type and the wear state of the receivers.

9. The system of claim 8, wherein the control module is further configured to control an operation mode of the smart terminal device according to the wear state of the receivers.

10. The system of claim 8 or 9, wherein the running sub-module comprises:
a first application running subunit configured to control to start up and display a desktop application when the wear state of the receivers is the wearing state; or
a second application running subunit configured to control to start up an application preset in the smart terminal device when the wear state of the receivers is the wearing state; and
a third application running subunit configured to control a display interface to display a list of applications and start up an application selected by a user from the list when the wear state of the receivers is the wearing state.

11. The system of claim 8 or 9, wherein the control sub-module comprises:
a first rich media switch subunit configured, when the running application is a rich media application, wherein rich media applications include multimedia applications and game applications, to determine whether the running application is in a first running state if the wear state of the receivers is the wearing state, if yes, the first rich media switch subunit is configured to control the running application to be switched from the first running state to a second running state;
a second rich media switch subunit configured, when the running application is a rich media application, to determine the running state of the running application if the wear state of the receivers is the taking-off state, wherein the second rich media switch subunit is configured to control the running application to be switched from the second running state to the first running state if the running application is in the second running state, and wherein the second rich media switch subunit is configured to control the running application to be switched from the first running state to the second running state and to control the smart terminal device to be switched to a first operation mode if the running application is in the first running state;
a first communication switch subunit configured, when the running application is a communication application, to control the smart terminal device to be switched to a second operation mode or determine whether the running state is in the first running state if the wear state of the receivers is the wearing state, wherein the first communication switch subunit is configured to control the running application to be switched from the first running state to the second running state if the running application is in the first running state;
a second communication switch subunit configured, when the running application is a communication application, to control the smart terminal device to be switched to a third operation mode or determine whether the running state is in the second running state if the wear state of the receivers is the taking-off state, and the second communication switch subunit is configured to control the running application to be switched from the second running state to the first running state if the running application is in the second running state.

12. The system of claim 11, wherein controlling the running application to be switched from the first running state to the second running state comprises:
when only one application is running, the running application is controlled to be switched from the first running state to the second running state; and
when two or more running applications are running, a list of the running applications is provided and an application selected by a user from the list is controlled to be switched from the first running state to the second running state.

13. The system of claim 8, wherein the detection module is configured to detect the wear states of the receivers of the earphone connected to the smart terminal device through a sensor installed in surface of or inside the receivers of the earphone;
wherein, the sensor comprises at least one of a camera sensor, a capacitive electrostatic sensor, a resistive pressure sensor, a piezoelectric sensor, an optical sensor, an infrared sensor, and a distance sensor.

14. The system of claim 8, wherein the detection sub-module comprises:
a receiving subunit configured to receive a control instruction generated by a signal codec installed in the earphone; and
a detection subunit configured to detect whether or not an application is running in the smart terminal device according to the control instruction.

15. A computer program comprising computer executable instructions for causing a computer or a device to implement the method according to any one of claims 1 to 7.

## Patentansprüche

1. Verfahren zum Steuern eines intelligenten Endgeräts, **dadurch gekennzeichnet, dass** das Verfahren umfasst:
Erfassen (110, 200) eines Benutzungszustands der Hörer eines Kopfhörers, der mit dem intelligenten Endgerät verbunden ist, wobei der Benutzungszustand einen Tragezustand, was einem Tragen der Kopfhörer durch einen Benutzer des intelligenten Endgeräts entspricht, und einen Absetzzustand, was einem Abgesetztsein der Kopfhörer durch den Benutzer entspricht, umfasst, und
Steuern (102, 202) eines Betriebszustands einer Anwendung in dem intelligenten Endgerät gemäß dem Benutzungszustand der Hörer,
wobei das Steuern eines Betriebszustands einer Anwendung in dem intelligenten Endgerät gemäß dem Benutzungszustand der Hörer umfasst:
Erfassen (2021), ob eine Anwendung in dem intelligenten Endgerät ausgeführt wird oder nicht,
wenn nein, Starten (2022) einer Anwendung in dem intelligenten Endgerät gemäß einer vorbestimmten Strategie gemäß dem Benutzungszustand der Hörer,
wenn ja, Bestimmen (2023) eines Typs der laufenden Anwendung, so dass der Betriebszustand der laufenden Anwendung entsprechend dem bestimmten Typ und dem Benutzungszustand der Hörer gesteuert wird.

2. Verfahren nach Anspruch 1, ferner umfassend Steuern einer Betriebsart des intelligenten Endgeräts gemäß dem Benutzungszustand der Hörer.

3. Verfahren nach Anspruch 1 oder 2, wobei das Starten, wenn nein, einer Anwendung in dem intelligenten Endgerät gemäß einer vorbestimmten Strategie gemäß dem Benutzungszustand der Hörer umfasst:
wenn der Benutzungszustand der Hörer der Tragezustand ist, Steuern, um eine Desktop-Anwendung zu starten und anzuzeigen, oder,
wenn der Benutzungszustand der Hörer der Tragezustand ist, Steuern, um eine in dem intelligenten Endgerät voreingestellte Anwendung zu starten, oder
wenn der Benutzungszustand der Hörer der Tragezustand ist, Steuern einer Anzeigeschnittstelle zum Anzeigen einer Liste von Anwendungen, so dass eine von einem Benutzer aus der Liste ausgewählte Anwendung gestartet wird.

4. Verfahren nach Anspruch 1 oder 2, wobei das Bestimmen, wenn ja, eines Typs der laufenden Anwendung, so dass der Betriebszustand der laufenden Anwendung entsprechend dem bestimmten Typ und dem Benutzungszustand der Hörer gesteuert wird umfasst:
wenn die laufende Anwendung eine Rich-Media-Anwendung ist, wobei Rich-Media-Anwendungen Multimedia-Anwendungen und Spieleanwendungen umfassen, Bestimmen, ob sich die laufende Anwendung in einem ersten Betriebszustand befindet, wenn der Benutzungszustand der Hörer der Tragezustand ist, wobei, wenn ja, die laufende Anwendung gesteuert wird, um vom ersten Betriebszustand in einen zweiten Betriebszustand geschaltet zu werden,
wenn die laufende Anwendung eine Rich-Media-Anwendung ist, Bestimmen des Betriebszustands der laufenden Anwendung wenn der Benutzungszustand der Hörer der Absetzzustand ist, wobei die laufende Anwendung gesteuert wird, um von dem zweiten Betriebszustand in den ersten Betriebszustand geschaltet zu werden, wenn sich die laufende Anwendung im zweiten Betriebszustand befindet, und die laufende Anwendung gesteuert wird, um vom ersten Betriebszustand in den zweiten Betriebszustand geschaltet zu werden, und das intelligente Endgerät gesteuert wird, um in einen ersten Betriebsmodus geschaltet zu werden, wenn sich die laufende Anwendung im ersten Betriebszustand befindet,
Steuern des intelligenten Endgeräts, um in die zweite Betriebsart geschaltet zu werden, oder Bestimmen, ob sich der Betriebszustand im ersten Betriebszustand befindet, wenn die laufende Anwendung eine Kommunikationsanwendung ist und der Benutzungszustand der Hörer der Tragezustand ist, wobei die laufende Anwendung gesteuert wird, um vom ersten Betriebszustand in den zweiten Betriebszustand geschaltet zu werden, wenn die laufende Anwendung im ersten Betriebszustand ist, und
Steuern des intelligenten Endgeräts, um in eine dritte Betriebsart geschaltet zu werden, oder Bestimmen, ob sich der Betriebszustand im zweiten Betriebszustand befindet, wenn die laufende Anwendung eine Kommunikationsanwendung ist und der Benutzungszustand der Hörer der Absetzzustand ist, wobei die laufende Anwendung gesteuert wird, um vom zweiten Betriebszustand in den ersten Betriebszustand geschaltet zu werden, wenn sich die laufende Anwendung im zweiten Betriebszustand befindet.

5. Verfahren nach Anspruch 4, **dadurch gekennzeichnet, dass** das Steuern der laufenden Anwendung, die vom ersten Betriebszustand in den zweiten Betriebszustand zu schalten ist, umfasst:
wenn nur eine Anwendung läuft, Steuern der laufenden Anwendung, um von dem ersten Betriebszustand in den zweiten Betriebszustand geschaltet zu werden, und,
wenn zwei oder mehr laufende Anwendungen ausgeführt werden, Bereitstellen einer Liste der laufenden Anwendungen, so dass eine vom Benutzer aus der Liste ausgewählte Anwendung gesteuert wird, um vom ersten Betriebszustand in den zweiten Betriebszustand geschaltet zu werden.

6. Verfahren nach Anspruch 1, wobei das Erfassen eines Benutzungszustands von Hörern eines Kopfhörers, der mit dem intelligenten Endgerät verbunden ist, umfasst:
Erfassen des Benutzungszustands der Hörer des Kopfhörers, der mit dem intelligenten Endgerät verbunden ist, mittels eines Sensors, der in der Oberfläche oder im Inneren der Hörer des Kopfhörers installiert ist,
wobei der Sensor mindestens einen von einem Kamerasensor, einem kapazitiven elektrostatischen Sensor, einem Widerstands-Drucksensor, einem piezoelektrischen Sensor, einem optischen Sensor, einem Infrarotsensor und einem Abstandssensor umfasst.

7. Verfahren nach Anspruch 1, wobei das Erfassen, ob eine Anwendung in dem intelligenten Endgerät ausgeführt wird oder nicht, umfasst:
Empfangen einer Steueranweisung, die durch ein in dem Kopfhörer installiertes Signalcodec erzeugt wird, und
Erfassen gemäß der Steueranweisung, ob eine Anwendung in dem intelligenten Endgeräts ausgeführt wird oder nicht.

8. System zum Steuern eines intelligenten Endgeräts, **dadurch gekennzeichnet, dass** das System umfasst:
ein Erfassungsmodul (600, 700), das konfiguriert ist, um einen Benutzungszustand der Hörer eines Kopfhörers zu erfassen, der mit dem intelligenten Endgerät verbunden ist, wobei der Benutzungszustand einen Tragezustand, der einem Tragen der Kopfhörer durch einen Benutzer des intelligenten Endgeräts entspricht, und einen Absetzzustand, der einem Abgesetztsein der Kopfhörer durch den Benutzer entspricht, umfasst, und
ein Steuermodul (602, 702), das konfiguriert ist, um einen Betriebszustand einer Anwendung in dem intelligenten Endgerät gemäß dem Benutzungszustand der Hörer zu steuern,
wobei das Steuermodul umfasst:
ein Erfassungsubmodul (7021), das dazu konfiguriert ist, zu erfassen, ob eine Anwendung in dem intelligenten Endgerät ausgeführt wird oder nicht,
ein Ausführsubmodul (7022), das dazu konfiguriert ist, eine Anwendung in dem intelligenten Endgerät gemäß einer vorbestimmten Strategie gemäß dem Benutzungszustand der Hörer zu starten, wenn das Erfassungssubmodul erfasst, dass keine Anwendung in dem intelligenten Endgerät ausgeführt wird, und
ein Steuersubmodul (7023), das dazu konfiguriert ist, einen Typ der laufenden Anwendung zu bestimmen, wenn eine Anwendung in dem intelligenten Endgerät ausgeführt wird, und einen Betriebszustand der laufenden Anwendung gemäß dem bestimmten Typ und dem Benutzungszustand der Hörer zu steuern.

9. System nach Anspruch 8, wobei das Steuermodul ferner dazu konfiguriert ist, eine Betriebsart des intelligenten Endgeräts gemäß dem Benutzungszustand der Hörer zu steuern.

10. System nach Anspruch 8 oder 9, wobei das Ausführsubmodul umfasst:
eine erste Anwendungsausführ-Untereinheit, die dazu konfiguriert ist, das Starten und Anzeigen einer Desktop-Anwendung zu steuern, wenn der Benutzungszustand der Hörer der Tragezustand ist, oder
eine zweite Anwendungsausführ-Untereinheit, die dazu konfiguriert ist, das Starten einer in dem intelligenten Endgerät voreingestellten Anwendung zu steuern, wenn der Benutzungszustand der Hörer der Tragezustand ist, und
eine dritte Anwendungsausführ-Untereinheit, die dazu konfiguriert ist, eine Anzeigeschnittstelle zu steuern, um eine Liste von Anwendungen anzuzeigen und eine von einem Benutzer aus der Liste ausgewählte Anwendung zu starten, wenn der Benutzungszustand der Hörer der Tragezustand ist.

11. System nach Anspruch 8 oder 9, wobei das Steuersubmodul umfasst:
eine erste Rich-Media-Umschalt-Untereinheit, die dazu konfiguriert ist, wenn die laufende Anwendung eine Rich-Media-Anwendung ist, wobei Rich-Media-Anwendungen Multimedia-Anwendungen und Spieleanwendungen beinhalten, zu bestimmen, ob sich die laufende Anwendung in einem ersten Betriebszustand befindet, wenn der Benutzungszustand der Hörer der Tragezustand ist, und, wenn ja, die erste Rich-Media-Umschalt-Untereinheit dazu konfiguriert ist, die laufende Anwendung zu steuern, um vom ersten Betriebszustand in einen zweiten Betriebszustand geschaltet zu werden,
eine zweite Rich-Media-Umschalt-Untereinheit, die dazu konfiguriert ist, wenn die laufende Anwendung eine Rich-Media-Anwendung ist, den Betriebszustand der laufenden Anwendung zu bestimmen, wenn der Benutzungszustand der Hörer der Absetzzustand ist, wobei die zweite Rich-Media-Umschalt-Untereinheit dazu konfiguriert ist, die laufende Anwendung zu steuern, um vom zweiten Betriebszustand in den ersten Betriebszustand geschaltet zu werden, wenn sich die laufende Anwendung im zweiten Betriebszustand befindet, und wobei die zweite Rich-Media-Umschalt-Untereinheit dazu konfiguriert ist, die laufende Anwendung zu steuern, um vom ersten Betriebszustand in den zweiten Betriebszustand geschaltet zu werden, und das intelligente Endgerät zu steuern, um in eine erste Betriebsart geschaltet zu werden, wenn sich die laufende Anwendung im ersten Betriebszustand befindet,
eine erste Kommunikations-Umschalt-Untereinheit, die dazu konfiguriert ist, wenn die laufende Anwendung eine Kommunikationsanwendung ist, das intelligente Endgerät zu steuern, um in eine zweite Betriebsart geschaltet zu werden, oder zu bestimmen, ob sich der Betriebszustand im ersten Betriebszustand befindet, wenn der Benutzungszustand der Hörer der Tragezustand ist, wobei die erste Kommunikations-Umschalt-Untereinheit dazu konfiguriert ist, die laufende Anwendung zu steuern, um vom ersten Betriebszustand in den zweiten Betriebszustand geschaltet zu werden, wenn sich die laufende Anwendung im ersten Betriebszustand befindet,
eine zweite Kommunikations-Umschalt-Untereinheit, die dazu konfiguriert ist, wenn die laufende Anwendung eine Kommunikationsanwendung ist, das intelligente Endgerät zu steuern, um in eine dritte Betriebsart geschaltet zu werden, oder zu bestimmen, ob sich der Betriebszustand im zweiten Betriebszustand befindet, wenn der Benutzungszustand der Hörer der Absetzzustand ist, und die zweite Kommunikations-Umschalt-Untereinheit dazu konfiguriert ist, die laufende Anwendung zu steuern, um vom zweiten Betriebszustand in den ersten Betriebszustand geschaltet zu werden, wenn sich die laufende Anwendung im zweiten Betriebszustand befindet.

12. System nach Anspruch 11, wobei das Steuern der laufenden Anwendung, die von dem ersten Betriebszustand in den zweiten Betriebszustand zu schalten ist, umfasst:
wenn nur eine Anwendung läuft, Steuern der laufenden Anwendung, um vom ersten Betriebszustand in den zweiten Betriebszustand geschaltet zu werden, und
wenn zwei oder mehr laufende Anwendungen ausgeführt werden, Bereitstellen einer Liste der laufenden Anwendungen und Steuern einer von einem Benutzer aus der Liste ausgewählten Anwendung, um vom ersten Betriebszustand in den zweiten Betriebszustand geschaltet zu werden.

13. System nach Anspruch 8, wobei das Erfassungsmodul dazu konfiguriert ist, die Benutzungszustände der Hörer des Kopfhörers, der mit dem intelligenten Endgerät verbunden ist, mittels eines Sensor zu erfassen, der in der Oberfläche oder im Inneren der Hörer des Kopfhörers installiert ist,
wobei der Sensor mindestens einen von einem Kamerasensor, einem kapazitiven elektrostatischen Sensor, einem Widerstands-Drucksensor, einem piezoelektrischen Sensor, einem optischen Sensor, einem Infrarotsensor und einem Abstandssensor umfasst.

14. System nach Anspruch 8, wobei das Erfassungssubmodul umfasst:
eine Empfangsuntereinheit, die dazu konfiguriert ist, eine Steueranweisung zu empfangen, die von einem in dem Kopfhörer installierten Signalcodec erzeugt wird, und
eine Erfassungsuntereinheit, die dazu konfiguriert ist, gemäß der Steueranweisung zu erfassen, ob eine Anwendung in dem intelligenten Endgerät ausgeführt wird oder nicht.

15. Computerprogramm, umfassend computerausführbare Anweisungen, um einen Computer oder ein Gerät zu veranlassen, das Verfahren nach einem der Ansprüche 1 bis 7 durchzuführen.

## Revendications

1. Procédé de commande d'un dispositif terminal intelligent, **caractérisé en ce que** le procédé comprend les étapes ci-dessous consistant à :
détecter (100, 200) un état d'usure de récepteurs d'un écouteur connecté au dispositif terminal intelligent, dans lequel l'état d'usure comprend un état de port correspondant au port de l'écouteur par un utilisateur du dispositif terminal intelligent, et un état de retrait correspondant au retrait de l'écouteur par l'utilisateur ; et
commander (102, 202) un état de fonctionnement d'une application dans le dispositif terminal intelligent selon l'état d'usure des récepteurs ;
dans lequel l'étape de commande d'un état de fonctionnement d'une application dans le dispositif terminal intelligent selon l'état d'usure des récepteurs comprend les étapes ci-dessous consistant à :
détecter (2021) si une application est en cours d'exécution ou non dans le dispositif terminal intelligent ;
dans la négative, démarrer (2022) une application dans le dispositif terminal intelligent conformément à une stratégie prédéterminée selon l'état d'usure des récepteurs ;
dans l'affirmative, déterminer (2023) un type de l'application en cours d'exécution, de sorte que l'état de fonctionnement de l'application en cours d'exécution est commandé selon le type déterminé et l'état d'usure des récepteurs.

2. Procédé selon la revendication 1, comprenant en outre l'étape consistant à commander un mode de fonctionnement du dispositif terminal intelligent selon l'état d'usure des récepteurs.

3. Procédé selon la revendication 1 ou 2, dans lequel l'étape consistant à démarrer, dans la négative, une application dans le dispositif terminal intelligent conformément à une stratégie prédéterminée selon l'état d'usure des récepteurs comprend les étapes ci-dessous consistant à :
commander, lorsque l'état d'usure des récepteurs est l'état de port, le démarrage et l'affichage d'une application de bureau ; ou
commander, lorsque l'état d'usure des récepteurs est l'état de port, le démarrage d'une application prédéfinie dans le dispositif terminal intelligent ; ou
contrôler, lorsque l'état d'usure des récepteurs est l'état de port, à une interface d'affichage, d'afficher une liste d'applications, de sorte qu'une application sélectionnée par un utilisateur dans la liste est lancée.

4. Procédé selon la revendication 1 ou 2, dans lequel l'étape consistant à déterminer, dans l'affirmative, un type de l'application en cours d'exécution, de sorte que l'état de fonctionnement de l'application en cours d'exécution est commandé selon le type déterminé et l'état d'usure des récepteurs comprend les étapes ci-dessous consistant à :
déterminer, lorsque l'application en cours d'exécution est une application multimédia enrichie dans laquelle les applications multimédias enrichies incluent des applications multimédias et des applications de jeu, si l'application est dans un premier état de fonctionnement, si l'état d'usure des récepteurs est l'état de port, dans lequel, dans l'affirmative, l'application en cours d'exécution est commandée afin de commuter du premier état de fonctionnement à un second état de fonctionnement ;
déterminer, lorsque l'application en cours d'exécution est une application multimédia enrichie, l'état de fonctionnement de l'application en cours d'exécution, si l'état d'usure des récepteurs est l'état de retrait, dans lequel l'application en cours d'exécution est commandée afin de commuter du second état de fonctionnement au premier état de fonctionnement si l'application en cours d'exécution est dans le second état de fonctionnement, et l'application en cours d'exécution est commandée afin de commuter du premier état de fonctionnement au second état de fonctionnement, et le dispositif terminal intelligent est commandé afin de commuter sur le premier mode de fonctionnement, si l'application en cours d'exécution est dans le premier état de fonctionnement ;
commander au dispositif terminal intelligent de commuter sur un deuxième mode de fonctionnement, ou déterminer si l'état de fonctionnement est le premier état de fonctionnement, lorsque l'application en cours d'exécution est une application de communication et lorsque l'état d'usure des récepteurs est l'état de port, dans lequel l'application en cours d'exécution est commandée afin de commuter du premier état de fonctionnement au second état de fonctionnement si l'application en cours d'exécution est dans le premier état de fonctionnement ; et
commander au dispositif terminal intelligent de commuter sur un troisième mode de fonctionnement, ou déterminer si l'état de fonctionnement est le second état de fonctionnement, lorsque l'application en cours d'exécution est une application de communication et lorsque l'état d'usure des récepteurs est l'état de retrait, dans lequel l'application en cours d'exécution est commandée afin de commuter du second état de fonctionnement au premier état de fonctionnement lorsque l'application en cours d'exécution est dans le second état de fonctionnement.

5. Procédé selon la revendication 4, dans lequel l'étape consistant à commander à l'application en cours d'exécution de commuter du premier état de fonctionnement au second état de fonctionnement comprend les étapes ci-dessous consistant à :
commander, lorsqu'une seule application est en cours d'exécution, à l'application en cours d'exécution de commuter du premier état de fonctionnement au second état de fonctionnement ; et
fournir, lorsque deux applications ou plus sont en cours d'exécution, une liste des applications en cours d'exécution, de sorte qu'une application sélectionnée par l'utilisateur à partir de la liste est commandée afin de commuter du premier état de fonctionnement au second état de fonctionnement.

6. Procédé selon la revendication 1, dans lequel l'étape de détection d'un état d'usure de récepteurs d'un écouteur connecté au dispositif terminal intelligent comprend l'étape ci-dessous consistant à :
détecter l'état d'usure des récepteurs de l'écouteur connecté au dispositif terminal intelligent à l'aide d'un capteur installé en surface ou à l'intérieur des récepteurs de l'écouteur ;
dans lequel le capteur comprend au moins l'un parmi un capteur de caméra, un capteur électrostatique capacitif, un capteur de pression résistif, un capteur piézoélectrique, un capteur optique, un capteur infrarouge et un capteur de distance.

7. Procédé selon la revendication 1, dans lequel l'étape consistant à détecter si une application est en cours d'exécution ou non dans le dispositif terminal intelligent comprend les étapes ci-dessous consistant à :
recevoir une instruction de commande générée par un codec de signal installé dans l'écouteur ; et
détecter si une application est en cours d'exécution ou non dans le dispositif terminal intelligent conformément à l'instruction de commande.

8. Système destiné à commander un dispositif terminal intelligent, **caractérisé en ce que** le système comprend :
un module de détection (600, 700) configuré de manière à détecter un état d'usure de récepteurs d'un écouteur connecté au dispositif terminal intelligent, dans lequel l'état d'usure comprend un état de port correspondant au port de l'écouteur par un utilisateur du dispositif terminal intelligent, et un état de retrait correspondant au retrait de l'écouteur par l'utilisateur ; et
un module de commande (602, 702) configuré de manière à commander un état de fonctionnement d'une application dans le dispositif terminal intelligent selon l'état d'usure des récepteurs ;
dans lequel le module de commande comprend :
un sous-module de détection (7021) configuré de manière à détecter si une application est en cours d'exécution ou non dans le dispositif terminal intelligent ;
un sous-module de fonctionnement (7022) configuré de manière à démarrer une application dans le dispositif terminal intelligent conformément à une stratégie prédéterminée selon l'état d'usure des récepteurs, lorsque le sous-module de détection détecte qu'aucune application n'est en cours d'exécution dans le dispositif terminal intelligent ; et
un sous-module de commande (7023) configuré de manière à déterminer un type de l'application en cours d'exécution lorsqu'une application est en cours d'exécution dans le dispositif terminal intelligent, et à commander un état de fonctionnement de l'application en cours d'exécution selon le type déterminé et l'état d'usure des récepteurs.

9. Système selon la revendication 8, dans lequel le module de commande est en outre configuré de manière à commander un mode de fonctionnement du dispositif terminal intelligent selon l'état d'usure des récepteurs.

10. Système selon la revendication 8 ou 9, dans lequel le sous-module de fonctionnement comprend :
une première sous-unité d'exécution d'application configurée de manière à commander le démarrage et l'affichage d'une application de bureau lorsque l'état d'usure des récepteurs est l'état de port ; ou
une deuxième sous-unité d'exécution d'application configurée de manière à commander le démarrage d'une application prédéfinie dans le dispositif terminal intelligent lorsque l'état d'usure des récepteurs est l'état de port ; et
une troisième sous-unité d'exécution d'application configurée de manière à commander à une interface d'affichage d'afficher une liste d'applications et de démarrer une application sélectionnée par un utilisateur à partir de la liste lorsque, l'état d'usure des récepteurs est l'état de port.

11. Système selon la revendication 8 ou 9, dans lequel le sous-module de commande comprend :
une première sous-unité de commutation d'application multimédia enrichie configurée, lorsque l'application en cours d'exécution est une application multimédia enrichie dans laquelle les applications multimédias enrichies incluent des applications multimédias et des applications de jeu, de manière à déterminer si l'application en cours d'exécution est dans un premier état de fonctionnement si l'état d'usure des récepteurs est l'état de port, dans lequel, dans l'affirmative, la première sous-unité de commutation d'application multimédia enrichie est configurée de manière à commander à l'application en cours d'exécution de commuter du premier état de fonctionnement au second état de fonctionnement ;
une seconde sous-unité de commutation d'application multimédia enrichie configurée, lorsque l'application en cours d'exécution est une application multimédia enrichie, de manière à déterminer l'état de fonctionnement de l'application en cours d'exécution, si l'état d'usure des récepteurs est l'état de retrait, dans lequel la seconde sous-unité de commutation d'application multimédia enrichie est configurée de manière à commander à l'application en cours d'exécution de commuter du second état de fonctionnement au premier état de fonctionnement, si l'application en cours d'exécution est dans le second état de fonctionnement, et dans lequel la seconde sous-unité de commutation d'application multimédia enrichie est configurée de manière à commander à l'application en cours d'exécution de commuter du premier état de fonctionnement au second état de fonctionnement, et à commander au dispositif terminal intelligent de commuter sur un premier mode de fonctionnement, si l'application en cours d'exécution est dans le premier état de fonctionnement ;
une première sous-unité de commutation de communication configurée, lorsque l'application en cours d'exécution est une application de communication, de manière à commander au dispositif terminal intelligent de commuter sur un deuxième mode de fonctionnement, ou à déterminer si l'état de fonctionnement est le premier état de fonctionnement, si l'état d'usure des récepteurs est l'état de port, dans lequel la première sous-unité de commutation de communication est configurée de manière à commander à l'application en cours d'exécution de commuter du premier état de fonctionnement au second état de fonctionnement si l'application en cours d'exécution est dans le premier état de fonctionnement ;
une seconde sous-unité de commutation de communication configurée, lorsque l'application en cours d'exécution est une application de communication, de manière à commander au dispositif terminal intelligent de commuter sur un troisième mode de fonctionnement, ou à déterminer si l'état de fonctionnement est le second état de fonctionnement si l'état d'usure des récepteurs est l'état de retrait, et la seconde sous-unité de commutation de communication est configurée de manière à commander à l'application en cours d'exécution de commuter du second état de fonctionnement au premier état de fonctionnement, si l'application en cours d'exécution est dans le second état de fonctionnement.

12. Système selon la revendication 11, dans lequel l'étape consistant à commander à l'application en cours d'exécution de commuter du premier état de fonctionnement au second état de fonctionnement comprend les étapes ci-dessous dans lesquelles :
lorsqu'une seule application est en cours d'exécution, l'application en cours d'exécution est commandée afin de commuter du premier état de fonctionnement au second état de fonctionnement ; et
lorsque deux applications ou plus sont en cours d'exécution, une liste des applications en cours d'exécution est fournie et une application sélectionnée par un utilisateur à partir de la liste est commandée afin de commuter du premier état de fonctionnement au second état de fonctionnement.

13. Système selon la revendication 8, dans lequel le module de détection est configuré de manière à détecter les états d'usure des récepteurs de l'écouteur connecté au dispositif terminal intelligent à l'aide d'un capteur installé en surface ou à l'intérieur des récepteurs de l'écouteur ;
dans lequel le capteur comprend au moins l'un parmi un capteur de caméra, un capteur électrostatique capacitif, un capteur de pression résistif, un capteur piézoélectrique, un capteur optique, un capteur infrarouge et un capteur de distance.

14. Système selon la revendication 8, dans lequel le sous-module de détection comprend :
une sous-unité de réception configurée de manière à recevoir une instruction de commande générée par un codec de signal installé dans l'écouteur ; et
une sous-unité de détection configurée de manière à détecter si une application est en cours d'exécution ou non dans le dispositif terminal intelligent conformément à l'instruction de commande.

15. Programme informatique comprenant des instructions exécutables par ordinateur pour amener un ordinateur ou un dispositif à mettre en œuvre le procédé selon l'une quelconque des revendications 1 à 7.
